Europäisches Patentamt

European Patent Office

Office européen des brevets

(11) Veröffentlichungsnummer: **0 253 986**

**A1**

(12) **EUROPÄISCHE PATENTANMELDUNG**

(21) Anmeldenummer: 87107332.6

(22) Anmeldetag: 20.05.87

(51) Int. Cl.4: **B64C 9/02** , B64C 9/20

(30) Priorität: 22.07.86 DE 3624675

(43) Veröffentlichungstag der Anmeldung:
27.01.88 Patentblatt 88/04

(84) Benannte Vertragsstaaten:
FR GB IT NL

(71) Anmelder: **DORNIER GMBH**
**Postfach 1420**
**D-7990 Friedrichshafen 1(DE)**

(72) Erfinder: **Heynatz, Johann Theodor, Prof.**
**Dr.-Ing.**
**Spiegelberg 3**
**D-7997 Immenstaad(DE)**

(74) Vertreter: **Landsmann, Ralf, Dipl.-Ing.**
**DORNIER GMBH - Patentabteilung - Kleeweg**
**3**
**D-7990 Friedrichshafen 1(DE)**

(54) Einrichtung zur Verstellung von Hochauftriebsklappen an Flugzeugtragflügel.

(57) Einrichtung zur Verstellung von Klappen, insbesondere von Hochauftriebsklappen bzw. Klappensystemen an der Hinterkante von Flugzeugtragflügeln, mit Tragarmen bzw. Auslegerarmen zur schwenkbaren Aufnahme der Hochauftriebsklappen und Klappenverstelleinrichtungen. Zur Verminderung des Luftwiderstandes sind insbesondere für die Marschflugphase eines Flugzeuges die außerhalb der Flügelkontur liegenden Klappen-Schwenklagerungen (25, 26) um Achsen (24; 22, 23), die sich in Richtung der Flügeltiefe erstrecken, in eine widerstandsarme Stellung einklappbar vorgesehen. Die Klappen-Schwenklagerungen (25, 26) und deren Träger (10, 11) sind von einem Hauptträger (9) aufgenommen und sind mit diesem einklappbar.

Fig. 5

EP 0 253 986 A1

## Einrichtung zur Verstellung von Klappen, insbesondere Hochauftriebsklappen an Flugzeugtragflügeln

Die Erfindung betrifft Einrichtungen zur Verstellung von Klappen, insbesondere Hochauftriebsklappen bzw. Klappensystemen an der Hinterkante von Flugzeugtragflügeln, mit Tragarmen Auslegerarmen bzw. Hebelverstellgetrieben zur schwenkbaren Aufnahme der Hochauftriebsklappen und Klappenverstelleinrichtungen.

Klappen bzw. Klappensysteme an den Tragflügeln von Flugzeugen werden eingesetzt, um über eine Auftriebssteigerung zur Verringerung der Mindestfluggeschwindigkeit z.B. für den Landevorgang zu gelangen. Die Klappen werden dazu mittels einer geeigneten Kinematik zur Vergrößerung der wirksamen Auftriebsfläche aus der Einfahrstellung, in der sie mit dem Tragflügel eine geschlossene Profilkontur bilden, nach hin ten und gleichzeitig oder getrennt auf einer gekrümmten Bahn nach unten verschwenkt und damit die Strömungszirkulation vergrößert.

Bekannte Verstellgetriebe enthalten in Richtung der Tragflügeltiefe ausfahrbare Führungsschienen mit gekrümmtem Verlauf, in denen sich die Klappen tragende Führungsschlitten bewegen, wobei die Klappen gegenüber den Tragflügeln um Achsen parallel zur Tragflügelspannweite schwenkbar gelagert sind.

Andere bekannte Ausführungen von Verstelleinrichtungen für derartige Klappen enthalten Trägerarme, an denen sich die Hochauftriebsklappen lagern und um Schwenkachsen mit den Trägerarmen auf einer Kurvenbahn gegenüber den Tragflügeln aus der Einfahrstellung in eine Ausfahrstellung nach hinten und unten verschwenkbar sind.

Um zu Klappenschwenkradien zu gelangen, die in allen Klappenschwenkstellungen einerseits eine einwandfreie Umströmung der Tragflügel zulassen und andererseits eine möglichst wirksame Vergrößerung der Auftrieb liefernden Fläche erreichen zu können, sind Trägerarme für die Klappen relative großer Längserstreckung erforderlich. Dies führt dazu, daß sich die Träger auch in ihrer Einfahr stellung sich nicht innerhalb der Tragflügelaußenkontur unterbringen lassen, sondern über die Tragflügelunterseite hinausragen. Um den Luftwiderstand möglichst gering zu halten, werden für die Tragarme Verkleidungen vorgesehen.

Es sind zwar auch Hebelgetriebe für die Aufnahme und Verschwenkung solche Klappen bekannt, die im Einfahrzustand innerhalb der Außenkontur der Tragflügel liegen, jedoch sind solche Getriebe relativ aufwendig und kompliziert und ihr Anwendung ist infolge des erforderlichen Raumbedarfes auf Tragflügel mit relative dickem Profil begrenzt.

Aufgabe der vorliegenden Erfindung ist es, die Klappenschwenkeinrichtung so auszubilden, daß in Einfahrstellung der Klappen, das heißt während der Marschflugphase des Fluges, keine Teile oder nur gering bemessene Abschnitte des Klappenverstellmechanismen über die die Tragflügelaußenkontur, über die Tragflügelunterseite hinausragt.

Die gestellte Aufgabe ist gelöst durch die Ausbildung der Klappenverstelleinrichtung gemäß den Merkmalen des Hauptanspruches und in der weiteren, vorteilhaften Ausgestaltung des Haupterfindungsgedankens nach den Merkmalen der Unteransprüche.

Die erfindungsgemäße Ausbildung ermöglicht, die Klappenschwenkachsen mittels der Klappenträger, entsprechend den Erfordernissen der Klappenausschlages frei zu gestalten und im Marschflug des Flugzeuges den Luftwiderstand so gering als möglich zu halten.

Dabei erfordert die erfindungsgemäße Ausbildung nur einen relativ geringen zusätzlichen Bauaufwand, wobei die herkömmliche Ausbildung des Klappenverstellmechanismus im wesentlichen beibehalten werden kann.

In der Zeichnung sind Ausführungsbeispiele gemäß der Erfindung dargestellt. Die Ausführungsbeispiele sind anhand der Zeichnung und der nachfolgenden Beschreibung näher erläutert.

In der Zeichnung zeigt:

Figur 1 den hinteren Teil eines Flugzeugtragflügels in Verbindung mit einem Landeklappensystem schematisiert und im Querschnitt gemäß der Linie I-I der Figur 2 dargestellt,

Figur 2 in einem Schnitt nach der Linie II-II der Figur 1 einen Flügelabschnitt mit dem Hauptklappenträger in Verbindung mit dem Trägerverstellmechanismus in Einklapplage,

Figur 3 den hinteren Teil eines Flugzeugtragflügels mit gegenüber Figur 1 in Ausklapplage befindlichen Klappenträgern im Querschnitt nach der Linie III-III der Figur 4,

Figur 4 einen Schnitt nach der Linie IV-IV der Figur 3 mit gegenüber Figur 2 in Ausklapplage befindlichem Klappenträger,

Figur 5 den hinteren Teil eines Flugzeugtragflügels im Querschnitt mit in einer Ausfahrstellung befindlichem Klappensystem und

Figur 6 Einzelheiten der Arretierungen für die Klappenträger bzw. Hochauftriebsklappen,

Figur 7 in einem Ausschnitt aus einem der Tragflügel eine weitere Ausführungsform der Einrichtung im Schnitt durch das Tragflügelprofil mit in Einklappstellung befindlichen Trägerteil,

Figur 8 übereinstimmend mit der Darstellung nach Figur 7 das Trägerteil in Ausklappstellung und

Figur 9 in einem Schnitt nach der Linie IX-IX der Figur 8 Einzelheiten der Führungen.

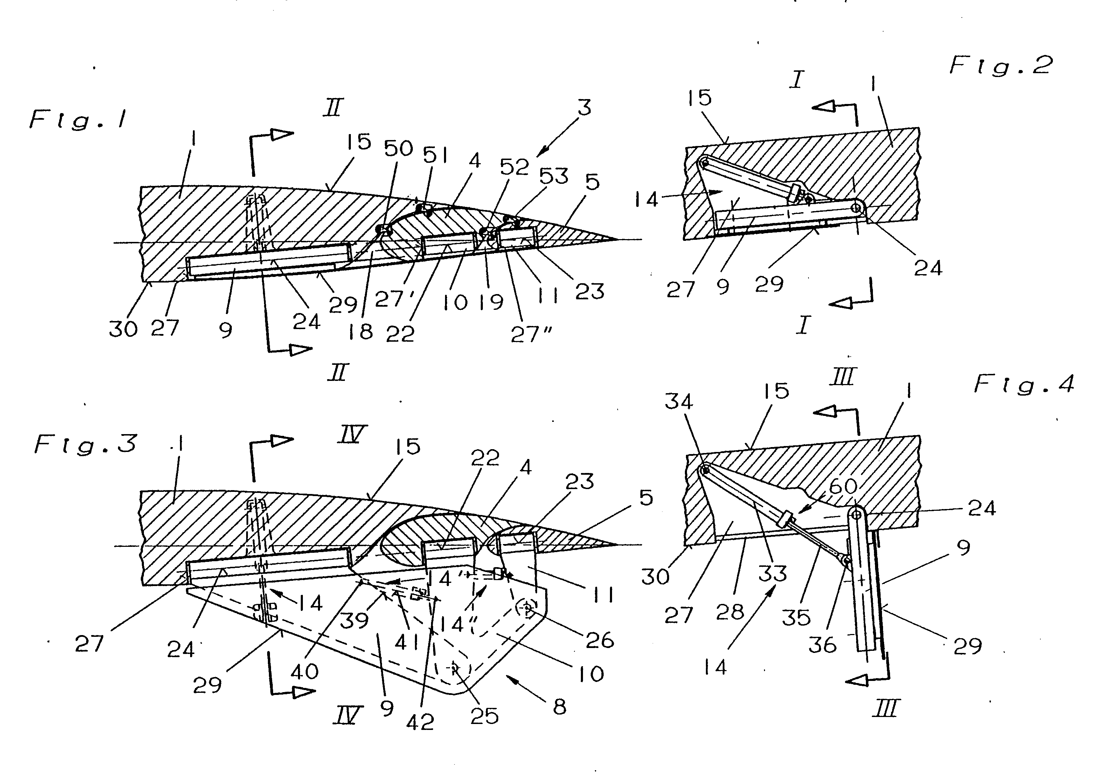

In Figuren 1 bis 5 ist der Flugzeugtragflügel mit 1 und das Klappensystem, bestehend aus einer vorderen bzw. hinteren Klappe 4 bzw. 5, mit 3 bezeichnet. Ferner sind am Tragflügel 1 Klappenträger, und zwar ein Trägerteil 9, ein erster Klappenträger 10 und zweiter Klappenträger 11 angeordnet. Den Klappenträgen 9, 10 bzw, 11 sind willkürlich oder auch über eine Automatik betätigbare Verstelleinrichtungen 14, 14' bzw. 14" zugeordnet.

Im einzelnen sind die Klappen 4 bzw. 5 in bekannter Weise so angeordnet, daß diese in ihrer Einfahrlage mit dem Flugzeugtragflügel 1 eine geschlossene Profilkontur bilden. Dazu liegen die ersten Klappen 4 mit ihrem profilierten Nasenteil in einer entsprechend geformten Ausnehmung 18 im hinteren Bereich des Tragflügels 1 und ebenso liegt die Profilnase der zweiten Klappen 5 in entsprechend geformten Ausnehmungen 19 an der Hinterkante der ersten Klappen 4. Die Tragflügeloberseite bzw. Tragflügelunterseite ist hier mit 15 bzw. 30 bezeichnet.

Die Klappen 4 bzw. 5 sind aufgenommen von den Klappenträgern 10 bzw. 11, wobei die Klappenträger gegenüber ihren zugehörigen Klappen um Achsen 22 bzw. 23 schwenkbar sind. Die Achsen erstrecken sich in Richtung der Profiltiefe des Tragflügels 1 und nehmen zueinander in Klappeneinfahrstellung eine koaxiale Lage ein.

Die ersten und zweiten Klappenträger 10 bzw. 11 werden aufgenommen von Trägerteilen 9, die sich am Tragflügel 1 mittels Achsen 24 klappbar lagern, wobei sich die Achsen 24 in Richtung der Profiltiefe des Tragflügels 1 erstrecken und in der in den Figuren 1 bis 4 gezeigten Klappeneinfahrstellung koaxial zu den Achsen 22 bzw. 23 der Klappen 4 bzw. 5 liegen. Die Trägerteile 9 nehmen mittels einer Schwenkachse 25, mit einer Lage quer zur Profiltiefe, das heißt in Richtung der Tragflügelspannweite die ersten Klappenträger 10 der Klappen 4 und die ersten Klappenträger 10 nehmen ihrerseits mittels einer Schwenkachse 26, mit einer Lage quer zur Profiltiefe, die zweiten Klappenträger 11 auf.

An der Profilunterseite 30 sind Ausnehmungen 27 gebildet, die zur Aufnahme der Klappenträger 9, 10 bzw, 11 in ihrer Einklappstellung dienen. Die Ausnehmungen entsprechen der äußeren Kontur der Träger, so daß in Einklappstellung eine Beeinträchtigung der Tragflügelumströmung durch die Träger vermieden wird.

Um auch Beeinträchtigungen der Strömung durch die Ausnehmungen 27, 27' bzw. 27" für die Klappenträger so gering wie möglich zu halten, sind am Hauptträger 9 feste Abdeckklappen 29 zum Abschluß der Ausnehmungsöffnungen 28 vorgesehen, die im Bereich der Ausnehmungen 27, 27' bzw. 27" die Beplankung der Profilunterseite 30 bilden.

Für die Klappbewegung der Klappenträger 9, 10 bzw. 11 um die Achsen 22, 23 bzw. 24 sind die Verstelleinrichtungen 14 vorgesehen, die durch hydraulisch arbeitende Stellmotore gebildet sind. Der Arbeitszylinder 33 der Verstelleinrichtungen 14 stützt sich über ein Gelenk 34 an der Struktur des Tragflügels 1 ab, während der zugehörige Arbeitskolben 35 über ein Gelenk 36 am Trägerteil 9 angreift. Dabei liegen die Verstelleinrichtungen 14 in einer Vertikalebene quer zu den vertikalen Profilschnittebenen.

Die Verstelleinrichtungen 14 liegen in Einklappstellung der Klappenträger 9, 10 bzw. 11 innerhalb der Ausnehmung 27 des Tragflügels 1. Die zu den Verstelleinrichtungen 14 gehörige Druckmittelsteuerung in Verbindung mit einem Druckerzeuger sind allgemein üblicher Bauart und hier der Vereinfachung halber nicht dargestellt.

Die Verstelleinrichtungen 14' bzw. 14" sind vorgesehen zum Aus - bzw. Einschwenken des Klappensystems. Die Klappen 4 bzw. 5 sind um die Achsen 25 bzw. 26 mittels der zugehörigen Klappenträger 10 bzw. 11 in Profiltiefenrichtung in beiden Richtungen verschwenkbar.

Die Verstelleinrichtungen 14' bzw. 14" abeiten hydraulisch. Die jeweils zugehörigen Druckmittelsteuereinrichtungen sind hier der Vereinfachung halber nicht dargestellt. Die Verstelleinrichtungen 14' greifen mit ihren Arbeitszylindern 39 und Gelenke 40 am Trägerteil 9 und mit ihren Arbeitskolben 41 und Gelenken 42 an den ersten Klappenträger 10 an. Die Verstelleinrichtungen 14" stützen sich demgegenüber mit ihren Arbeitszylindern 43 und Gelenken 44 an den ersten Klappenträgern 10 und mit ihrem Arbeitskolben 46 und Gelenken 47 an den zweiten Klappenträgern 11 gelenkig ab.

Die Wirkungsweise der beschriebenen Ausführung ist wie folgt:

Die Klappenausfahrbewegung erfolgt aus der in den Figuren 1 und 2 gezeigten Einklapplage in einer ersten Phase durch das Ausklappen des Trägerteiles 9 und die an diesem gelagerten Klappenträger 10 bzw. 11 in die zu den Tragflügeln 1 senkrechte Klappebene. Die Ausklappbewegung wird bewirkt durch die Verstelleinrichtungen 14. Die sich an den Tragflügeln 1 abstützenden Stellkolben 35 werden durch entsprechende Druckmittelsteuerung verstellt und damit die Trägerteile 9. In Ausklappstellung erfolgt die Verriegelung der Verstelleinrichtungen 14.

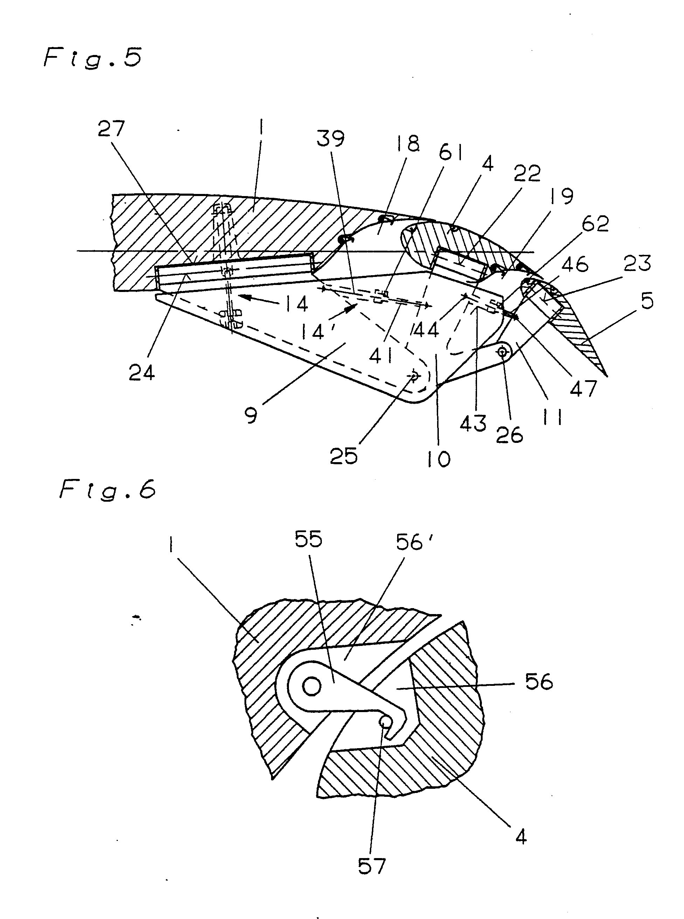

In der zweiten Phase der Klappenbetätigung werden die Klappen 4 bzw. 5 gemeinsam oder getrennt voneinander um ihre Schwenkachsen 25 bzw. 26 an den Klappenträgern 10 bzw. 11 mittels Betätigung der Verstelleinrichtungen 14' bzw. 14" aus der in Figur 3 bzw. 4 gezeigten Position in die Position gemäß Figur 5 verstellt. Die Stellkolben 35, der sich an den Trägerteilen 9 abstützenden Verstelleinrichtungen 14' bzw. die Stellkolben 46, der sich an den ersten Klappenträger 9 abstützenden Verstelleinrichtungen 14", verschwenken bei Ansteuerung der Verstelleinrichtungen die Klappen 4 bzw. 5 gemeinsam oder getrennt, wie in Figur 5 gezeigt. Die Verstelleinrichtungen 14' bzw. 14" sind in der Einfahrstellung in bekannter Weise arretierbar.

Es sind ferner Stelleinrichtungen vorgesehen, mit deren Hilfe sowohl die Phasen der Ausfahrbewegung als auch der Einfahrbewegung in der vorgesehenen Reihenfolge automatisch und voneinander abhängig gesteuert werden.

Es sind außerdem Verriegelungen 50, 51 bzw. 52, 53 zur Verriegelung der Klappen 4 mit dem Flugzeugtragflügel 1 bzw. der Klappen 5 mit den Klappen 4 in Einklappstellung der Träger 9, 10, 11 bzw. der Verstelleinrichtungen 14, 14', 14" (Figur 1) vorgesehen.

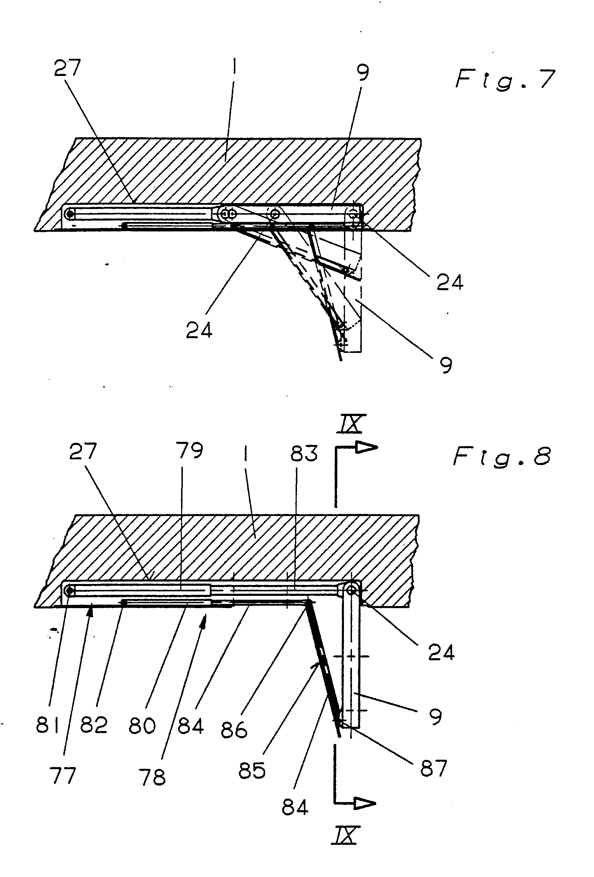

Die Verriegelungen 50, 51 bzw. 52, 53 enthalten beim gezeigten Ausführungsbeispiel gemäß Figur 6 schwenkbare Haken 55 am Tragflügel 1 bzw. an den Klappen 4 für den wahlweisen Eingriff in Vertiefungen 56 bzw. 56' mit Anschlagbolzen 57 an den Klappen 4 bzw. den Klappen 5.

Die Verriegelungen 50, 51 bzw. 52, 53 für die Klappen 4 bzw. 5 können zur günstigeren Unterbringung, gesehen in Spannweitenrichtung des Tragflügels 1 bzw. der Klappen 3, neben den Ausnehmungen 27, 27', 27" angeordnet sein.

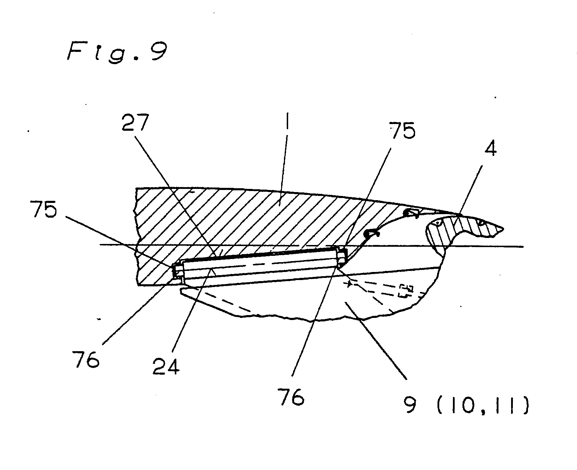

Bei dem in den Figuren 7 bis 9 gezeigten Ausführungsbeispiel ist vorgesehen, die Klappenträger 9, 10, 11 in die Ausnehmungen 27, 27', 27" an den Tragflügeln 1 bzw. den Klappen 4 bzw. 5 so einzufahren, daß die Schwenkachsen 24, 23, 22 achsparallel in Richtung der Tragflügelspannweite mittels entsprechender Führungen verstellbar sind, so daß die Klappenträger 9, 10, 11 einer zylindrischen Bahn folgend in die Ausnehmungen 27, 27', 27" der Tragflügel bzw. der Klappen 4 bzw. 5 einfahrbar bzw. aus diesen ausfahrbar sind.

Dazu sind zu beiden Seiten der Ausnehmungen 27, 27', 27" für die Klappenträger 9, 10, 11 einander gegenüberliegend an den Tragflügeln 1 bzw. der Klappen 4 bzw. 5 Führungsschienen mit Nuten 75 eingesetzt, die in Spannweitenrichtung der Flügel bzw. der Klappen parallel zueinander verlaufend angeordnet sind. In die Führungsnuten 75 greifen an den Schwenkachsen 24, 22, 23 beidseitig gebildete Führungszapfen 76 ein.

Für die Erzielung einer achsparallelen Verstellung der Klappenachsen 24, 22, 23 der Trägerarme 9, 10, 11 sind Paare von Verstelleinrichtungen 77, 78 vorgesehen, die in Einklapplage der Klappenträger 9, 10, 11 wie die Klappenträger innerhalb der Ausnehmungen 27, 27', 27" liegen.

Die Verstelleinrichtungen 77 bzw. 78 sind an den Tragflügeln 1 bzw. den Klappen 4 bzw. 5 über Schwenkachsen 81 bzw. 82 in Vertikalebenen - schwenkbar. Der Stellkolben der Verstelleinrichtung 77 greift dabei am oberen Ende der Klappenträger 9, 10, 11 bzw. im Bereich der Klappachsen 24, 23, 22 gelenkig an.

Die zugehörige Verstelleinrichtung 82 greift mit ihrer Kolbenstrange 84 über ein Gelenk 86 an einer Führungsstange 85 an, die sich ihrerseits mit ihrem einen Ende über ein Gelenk 87 am unteren Ende der Klappenträger 9, 10, 11 und mit ihrem oberen Ende über ein Gelenk 86 am einen Ende der Kolbenstange 884 gelenkig lagert.

Die Öffnungen der Ausnehmungen 27, 27', 27" sind durch eine Abdeckklappe 28, welche fest mit der Führungsstange 85 verbunden ist, in Einfahrstellung der Klappenträger 9, 10, bzw. 11 anschließbar.

Die zu den Verstelleinrichtungen 77 bzw. 78 zugehörigen Steuereinrichtungen sind von üblicher Bau-und Wirkungsweise und daher im einzelnen der Übersichtlichkeithalber hier nicht dargestellt.

Die Wirkungsweise der gezeigten Ausführung ist wie nachfolgend beschrieben.

Für die Einfahrbewegung der Klappenträger 9, 10, 11 wird zunächst die Verstelleinrichtung 77 im Sinne einer Einfahrbewegung des Stellkolbens 83 betätigt.

Damit werden die Klappachsen 24, 23, 22 in Richtung der Längsache der Verstelleinrichtung 77, das heißt in Richtung der Spannweite der Tragflügel 1 bzw. der Klappen 4 bzw. 5 parallel verstellt. Mittels der Führungsnuten 75 bzw. der Führungszapfen 76 an den Klappachsen 24 bzw. 23 bzw. 22 wird die Führung der Klappachsen parallel und auf einer Geraden bewirkt.

Gleichzeitig wird in Abhängigkeit von der Verstellung der Kolben 83 der Verstelleinrichtungen 77 auch der Stellkolben 84 der Verstelleinrichtungen 78 im Sinne einer Einfahrbewegung bewegt. Über die Gelenke 86 und 87 wird mittels der Führungsstange 85 das untere Ende der Klappenträger 9, 10, 11 in Form einer Geradführung vertikal zu den Tragflügeln 1 verstellt.

Durch die gemeinsame Verstellbewegung der Einrichtungen 77, 78 bewegen sich die Klappenträger 9, 10, 11 auf einer Kreiszylinderbahn in ihre Einfahrlage innerhalb der Ausnehmungen 27, 27', 27", so daß dann sämtliche Teile der Verstelleinrichtungen und der Klappenträger 9, 10, 11 innerhalb der Ausnehmungen 27, 27', 27" liegen.

Die Ausfahrbewegung der Klappenträger erfolgt in umgekehrtem Sinne. Die Verstelleinrichtungen der Träge 9, 10 bzw. 11 bzw. der Klappen 4, 5 sind zur Erzielung einer verkantungsfreien Verstellung beidseitig der Träger und Klappen angeordnet.

Die Klappenträger 9, 10, 11 können zur Erzielung einer Auftriebssteigerung durch Wölbungsänderung mittels der Klappenschwenkung und einer dieser überlagerter Verstellung der Klappen 4 bzw. 5 in Richtung der Profiltiefe gegeneinander verstellbar angeordnet sein (Fowlerklappen), ohne die erfindungsgemäße Ausbildung einzuschränken.

Für die strömungsgünstige Verkleidung der Ausnehmungen 27, 27' und 27" könne die Abdeckklappen 29 bzw. 88 dienen. Durch die Formanpassung der Ausnehmungen 27, 27' bzw. 27" an die Träger-Umrißform bilden die der Strömung zugwandten und in die Unterseite 15' der Tragflügel 1 übergehenden Oberflächen der Träger 9, 10 bzw. 11 strömungsgünstige Abschlüsse (nicht dargestellt).

Die Geradführungen 75, 76; 79, 80 für die Träger 9, 10 bzw. 11 gemäß der Ausführung nach Figuren 7 bis 9 erlauben das Ein-bzw. Ausklappen der Träger 9, 10, 11 mit geringstmöglicher Weite der Durchlaßöffnungen in der Profilunterseite 15' der Tragflügel 1. Für den Ein-bzw. Ausklappvorgang für die Träger 10 bzw. 11 ist eine Verriegelung der Klappen 4 bzw. 5 in Einfahrstellung Voraussetzung.

## Ansprüche

1. Einrichtung zur Verstellung von Klappen, insbesondere von Hochauftriebsklappen bzw. Klappensystemen an der Hinterkante von Flugzeugtragflügeln, mit Tragarmen, Auslegerarmen bzw. Hebelstellgetrieben zur schwenkbaren Aufnahme der Hochauftriebsklappen und Klappenverstelleinrichtungen, **dadurch gekennzeichnet,** daß
-die Klappenschwenkachsen (25 bzw. 26) der Klappen (4) bzw. eines Klappensystems (4 bzw. 5) aufnehmende Klappenträger (9, 10, 11) vorgesehen sind, daß
-die Klappenträger (9, 10, 11) gemeinsam um in Klappeneinfahrstellung zueinander koaxiale und sich in Richtung der Flügeltiefe erstreckende Achsen (24 bzw. 22 bzw. 23) klappbar vorgesehen und daß
-die Träger (9, 10. 11) gemeinsam mit der bzw. den Klappenverstelleinrichtungen (14, 14', 14") in eine den Luftwiderstand vermindernde Einklaplage an den Tragflügeln (1) verschwenkbar sind.

2. Ausführung einer Einrichtung nach Anspruch 1., dadurch gekennzeichnet, daß die entsprechend der Anzahl der Hochauftriebsklappen (4, 5) vorgesehenen Klappenträger (10, 11) über Achsen (26) aneinander und über eine Achse (25) gemeinsam an einem Trägerteil (9) schwenkbar gelagert sind, wobei das Trägerteil (9) und die Klappenträger (10, 11) in Einfahrstellung der Hochauftriebsklappen (4, 5) um zueinander koaxiale Achsen (24, 23, 22) klappbar sind.

3. Einrichtung nach Anspruch .1 oder 2, dadurch gekennzeichnet, daß die Klappenträger (9, 10, 11) zur Erzielung einer Veränderung der Lage der Klappen (4, 5) in Richtung der Tragflügeltiefe außer der Schwenkbewegung um ihre Achsen (25, 26) relativ gegeneinander verstellbar sind.

4. Einrichtung nach Anspruch 1 bis 3, dadurch gekennzeichnet, daß die Unterseite der Tragflügel (1) bzw. der Klappen (4, 5) Ausnehmungen (27, 27', 27") zur Aufnahme der Klappenträger (9, 10, 11) für eine Einklaplage innerhalb der Aussenkontur der Tragflügel (1) bzw. der Klappen (4 bzw. 5) aufweist.

5. Einrichtung nach Anspruch 1 bis 4, dadurch gekennzeichnet, daß für die Abdeckung der Ausnehmungen (27, 27', 27") in Trägereinklappstellung Abdeckklappen (29) vorgesehen sind.

6. Einrichtung nach Anspruch 1 bis 5, dadurch gekennzeichnet, daß für die Abdeckung der Ausnehmungen (27, 27', 27") der Tragflügel (1) und der Klappen (4, 5) eine gemeinsame, an einem der Klappenträger (9, 10, 11) fest angeordnete Abdeckklappe (29) vorgesehen ist.

7. Einrichtung nach Anspruch 1 bis 6, dadurch gekennzeichnet, daß die Ausnehmungen (28, 27', 27") zur Aufnahme der Klappenträger (9, 10, 11) eine Aussparungsform entsprechend der Form der aufzunehmenden Träger (9, 10, 11) für eine mit der Tragflügelunterseite oberflächenbündige Aufnahme in Einklaplage aufweisen.

8. Einrichtung nach Anspruch 1 bis 7, dadurch gekennzeichnet, daß die Klappenverstelleinrichtung (14, 14', 14") und die Klappenträger (9, 10, 11) eine Umrißform aufweisen, die sich in Einklaplage gemeinsam zu einer durch geschlossenen Form ergänzen und mit ihren Oberflächen in die Tragflügelunterseite der Tragflügel übergehen.

9. Einrichtung nach Anspruch 1 bis 8, dadurch gekennzeichnet, daß die Ausnehmungen (27, 27', 27") bei in Ausklaplage (Arbeitslage) befindlichen Trägern (9, 10, 11) und Verstelleinrichtungen (14, 14', 14") durch Klappen strömungsgünstig abschließbar sind.

10. Einrichtung nach Anspruch 1 bis 9, dadurch gekennzeich net, daß für die Verstellung der Klappen (4, 5) in bzw. aus Hochauftriebsstellungen eine die Klappenträger (9) in ihrer Ausklappstellung blockierende Einrichtung (60) vorgesehen ist.

11. Einrichtung nach Anspruch 1 bis 10, dadurch gekennzeichnet, daß die Verstelleinrichtungen (14' bzw. 14") für die Träger (9, 10, 11) der Klappen (4, 5) in ihrer Einfahrstellung in Abhängigkeit von der Klappbewegung des Trägerteiles (9) arretierende Einrichtungen (61, 62) vorgesehen sind.

12. Einrichtung nach Anspruch 1 bis 11, dadurch gekennzeichnet, daß zwischen den Tragflächen (1) bzw. den Klappen (4, 5) und den Klappachsen (24, 22, 23) Führungen (75, 76) zur Parallelverstellung der Klappachsen in Richtung der Spannweite der Tragflügel (1) und an den Klappenträgern (9, 10, 11) angreifende Verstelleinrichtungen (77, 78) zur Erzielung einer Klappbewegung der Klappenträger (9, 10, 11) in die Ausklapp-bzw. Einklapplage vorgesehen sind.

13. Einrichtung nach Anspruch 1 und 12, dadurch gekennzeichnet, daß von je zwei Verstelleinrichtungen (77, 78) eine (77) an den Klappenträgern (9, 10, 11) im Bereich der Klapplagerung (24, 23, 22) und die zweite Einrichtung (78) über eine Führungsstange (85) gelenkig (87) im Bereich des der Lagerung (24, 23, 22) entgegengesetzten Endes der Träger (9, 10, 11) angreift.

Fig.1

Fig.2

Fig.3

Fig.4

*Fig.5*

*Fig.6*

Fig.7

Fig.8

Fig.9

Europäisches
Patentamt

**EUROPÄISCHER RECHERCHENBERICHT**

Nummer der Anmeldung

EP 87 10 7332

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A- 951 122 (LECAVELIER) <br> * Seite 1, Zeilen 1-17,31-56; Seite 2, Zeilen 1-7,22-34,98-104; Seite 3, Zeilen 1-74; Figuren 1-4 * | 1-4 | B 64 C 9/02 <br> B 64 C 9/20 |
| | ----- | | |
| | | | RECHERCHIERTE SACHGEBIETE (Int. Cl.4) |
| | | | B 64 C |

Der vorliegende Recherchenbericht wurde für alle Patentansprüche erstellt.

| Recherchenort | Abschlußdatum der Recherche | Prüfer |
|---|---|---|
| DEN HAAG | 21-10-1987 | ZERI A. |